# EUROPEAN PATENT APPLICATION

(11) **EP 1 550 375 A1**
(43) Date of publication of application: **06.07.2005**
(21) Application number: 04078521.4
(22) Date of filing: 24.12.2004
(51) Int. Cl.: A23G 3/00, A23G 3/28

(54) **Method and apparatus for making a candy product and the candy product itself**

(30) Priority: 30.12.2003 US 750241
(71) Applicant: Chan, Pak Nin, Kwun Tong Kowloon (HK)
(72) Inventor: Chan, Pak Nin, Kwun Tong Kowloon (HK)
(74) Representative: Hylarides, Paul Jacques

(57) **Abstract**

A first pattern (64) of candy beads (14) is picked up by use of a vacuum carrier (54) and is positioned on a region of the upper surface of a sheet candy member (12). The vacuum is turned off and the vacuum carrier (54) is moved away from the sheet candy member (12) leaving the pattern (64) of candy beads (14) on the sheet candy member (12). This procedure is repeated at least once, and preferably two more times, providing an additional pattern or pattern of different colored candy beads (16, 18) on the upper surface of the base candy member (12). The color of the base candy member (12) and the color of the different candy beads (14, 16, 18) together form a picture or a design on the sheet candy member (12).

## Description

### Technical Field

This invention relates to a candy product in the form of a flat candy base member or bar decorated by small candy beads or particles of several colors that together form a picture or design on the base member. It also relates to a method and apparatus for making the candy product.

### Background of the Invention

U.S. Patent No. 4,117,176, granted September 26, 1978, to Paul G. Taylor, Chung H. Son, Martha C. Hon, L. G. Williams and Ronald E. Steel, entitled Fruit Flavored Candy Product, and assigned to Del Monte Corporation, discloses a fruit flavored candy product having a translucent substrate and opaque dehydrated fruit particles randomly dispersed in the substrate. U.S. Patent No. 4,355,050, granted October 19, 1982, to Peter Butland, and entitled process for producing a Natural Fruit Candy, discloses a process for producing a candy composed of enzyme deactivated dehydrated fruit and enzyme deactivated fruit juice, in such proportions that a plastic mass is created from which individual candies are formed. These patents, Patent No. 4,117,176, in particular, describe other fruit flavored candy products that are being sold or have been sold.

A principal object of the present invention is to provide a method of producing a candy product and decorating it with candy beads arranged to form a picture or design on the candy product.

### Summary of the Invention

The present invention is basically characterized by providing a substantially planar sheet candy member having an upper side and a lower side. The lower side of the sheet candy member is positioned on a substantially planar support surface. A vacuum carrier is provided that has a substantially planar lower carrier surface. Colored candy beads are placed next to each other on a substantially flat support surface. The vacuum carrier is placed over the candy beads and the lower carrier surface of the carrier is directed towards the candy beads. The vacuum carrier is moved downwardly to place the carrier surface adjacent to candy beads. Then, a vacuum is connected to the vacuum carrier and is used to pick up a predetermined pattern of the candy beads from the support surface and hold them on the lower surface of the carrier. Next, the carrier and the candy beads are placed over the sheet candy member and are removed relatively towards the sheet candy member to place the pattern of candy beads on the upper surface of the sheet candy member. Then, the vacuum is released from the carrier and the carrier is moved away from the sheet candy member, leaving the pattern of candy beads attached to the sheet candy member.

According to an aspect of the invention, an edible adhesive is first provided on the upper side of the sheet candy member and the candy beads are applied to the edible adhesive.

According to another aspect of the invention, a press is placed on the candy beads and is pushed down to push the candy beads into the sheet candy member.

Preferably, plural patterns of different colored candy beads are deposited on the sheet candy member and used to form a picture or pattern on the upper surface of the sheet candy member, e.g., a picture of a comic character such as Spider Man.

Other objects, advantages, and features of the invention will become apparent from the description of the best mode set forth below, from the drawings, from the claims and from the principles that are embodied in the specific structures and steps that are illustrated and described.

### Brief Description of the Several Views of the Drawing

In the drawing, like reference numerals, designate like parts throughout the several views and:
Fig.1 is a pictorial view of a candy product produced by use of the invention, such view looking towards a side of the product showing that it is decorated by small candy beads;
Fig. 2 is a sectional view taken substantially along line 2-2 of Fig.1;
Fig. 3 is a fragmentary plain view taken from the aspect of line 3-3 in Fig. 2;
Fig.4 is an exploded pictorial view of a portion of an apparatus used for making the candy product, such view showing a substantially planar sheet candy member on a plastic film that is spaced upwardly from a vacuum holder and downwardly from a stencil;
Fig. 5 is an assembled view of the components of Fig. 4, showing the sheet candy member and the plastic film spaced above and laterally outwardly from the vacuum holder;
Fig. 5A is a fragmentary sectional view taken substantially along line 5A-5A of Fig. 5, such view showing an interior position of the vacuum holding member and small openings in the top of the member which communicates the vacuum with the assembly 12, 34;
Fig. 6 is a view like Fig. 5, but showing the sheet candy member and the plastic film on the vacuum holder and showing the stencil positioned down on the sheet candy member;
Fig. 7 is a view of the assembly shown by Fig. 6, shown positioned below a substantially flat support surface on which candy beads have been placed, such view also showing a vacuum carrier positioned above the flat support surface and the candy beads;
Fig. 7A is a fragmentary sectional view taken substantially along line 7A-7A of Fig. 7, such view showing multiple chambers in a vacuum manifold that is apart of the vacuum holder;
Fig. 8 is a view like Fig. 7 but showing of the vacuum carrier lowered onto the candy beads;
Fig. 9 is view like Fig. 8 but showing the vacuum carrier lifted off from the candy beads, and showing an open space in the candy beads representing a pattern of a candy beads that has been picked up by a carrier surface on the vacuum carrier;
Fig. 10 is a view like Fig. 8, showing the vacuum carrier and pattern of beads positioned over the stencil;
Fig. 11 is a view like Fig. 10 but showing the vacuum carrier lowered so as to place the pattern of candy beads into a void region of the stencil;
Fig. 12 is a view of the lower portion of Fig. 11 from which the vacuum carrier has been removed, such view showing the pattern of candy beads within the void of the stencil; and
Fig.. 13 is a vew like Fig. 12 but showing a press member position down on the stencil, said press member being used to push the pattern of candy beads into a surface portion of the sheet candy member.

### Detailed Description of the Invention

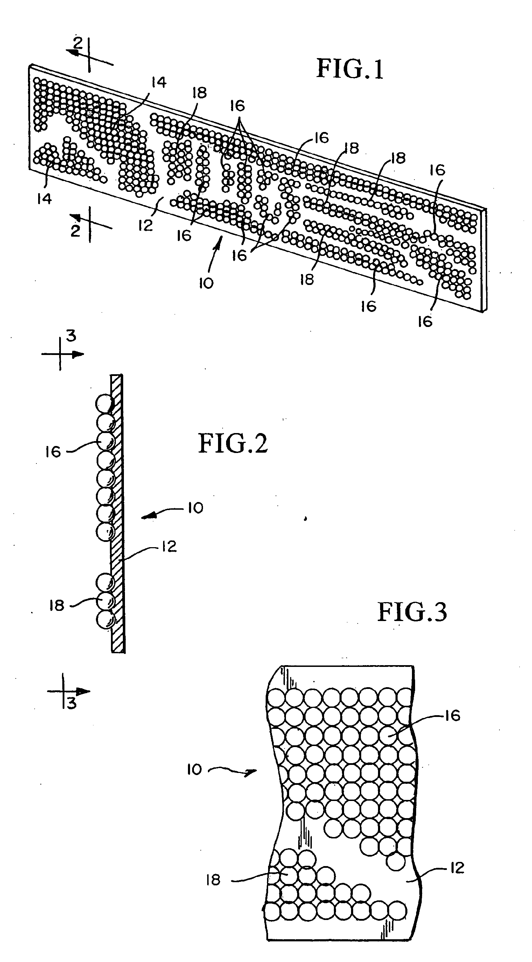

Referring to Fig. 1, the candy product that is produced by the method of present invention comprises a sheet candy member 12 that is decorated by patterns of colored candy beads, some of which are designated 14, 16, 18. Preferably, the sheet candy member 12 is a fruit candy substance made from a mixture of fruit concentrate and fruit juice cooked with sugar and modified starch and the fruit concentrate is the predominant ingredient. This composition is cooked to form a mass that is formed into thin slabs which are rolled into a flat sheet form and then cut into rectangular strips. The candy beads 14, 16 18 are preferably rounded. However, the exact shape of the beads 14, 16, 18 is not critical. By way of typical and therefore non-limitive example, the candy beads may be round and may measure about one sixteen (1/16) to about one eighth (1/8) in diameter or width. They may all be substantially the same size or may vary in size. If desired, however, the beads 14, 16, 18 can have an irregular shape and neither be uniform in size or shape.

Preferably, three or more different patterns of beads 14, 16, 18 are used and each pattern is made up of a different color of candy beads. The patterns are designed so that when they are combined on the sheet candy member 12, they will form pictures of characters or subjects. They may form portions of a comic book character, such as the well known "Spider Man," for example. The sheet candy base member 12 may have a first color and the three (or more) patterns of breads 14, 16, 18 may present additional colors, with the several colors together forming the desired picture or design.

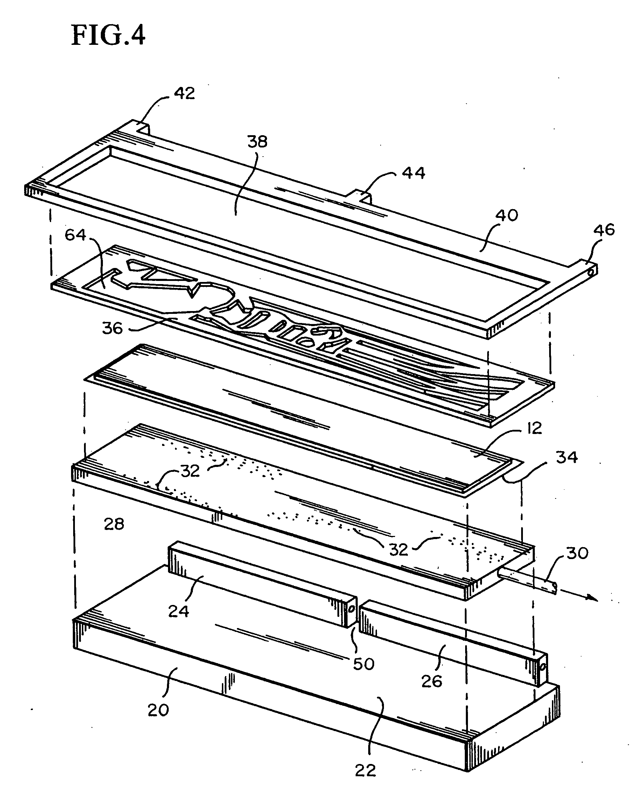

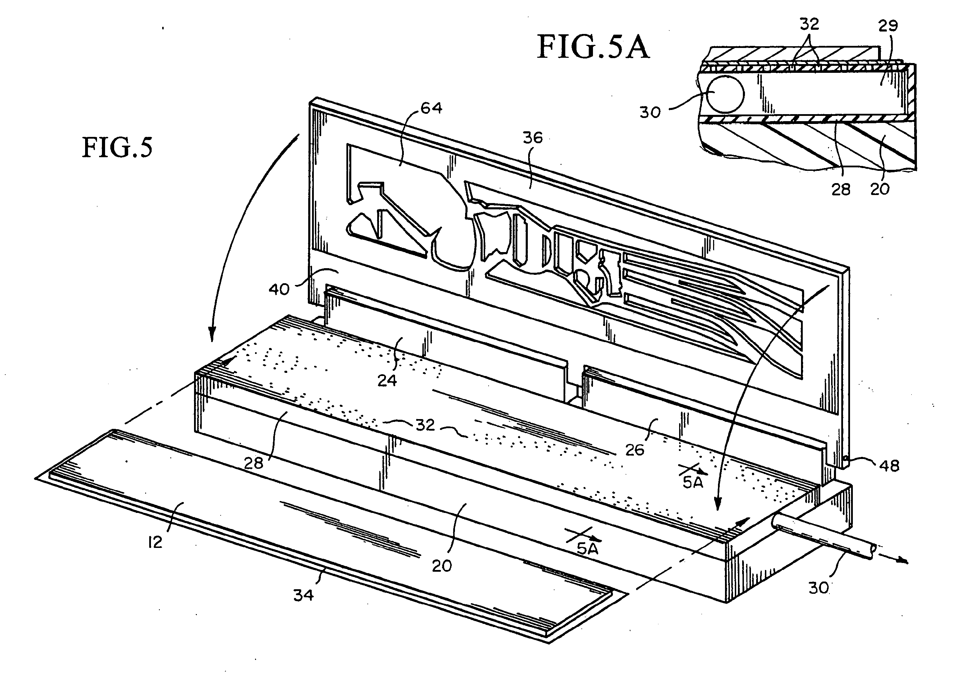

Apparatus for performing the method is shown by Figs. 4-14. Referring to Fig. 4, this apparatus comprises a support member 20 having a substantially planar support surface 22. A two part side wall 24, 26 extends along one longitudinal side of the member 20. A vacuum manifold 28 is positionable on the surface 22. Manifold 28 has a hollow interior (Fig. 5A), a conduit 30 may be connected to the hollow interior and small openings 32 may be provided in the top wall of the vacuum chamber. When a pump is connected to conduit 30, the air within the manifold is removed and a vacuum is created in the manifold which is in communication with the openings 32.

Positioned above manifold 28 in Fig. 4 is a candy sheet member 12 shown positioned on a plastic sheet 34 that is optional. The sheet candy member 12 may be adhered somewhat to the plastic sheet 34 when the plastic sheet is used. The assembly 12, 34 is connected to the upper surface of the vacuum manifold 28 by the vacuum that is created when the conduit 30 is connected to an exhaust pump (not shown).

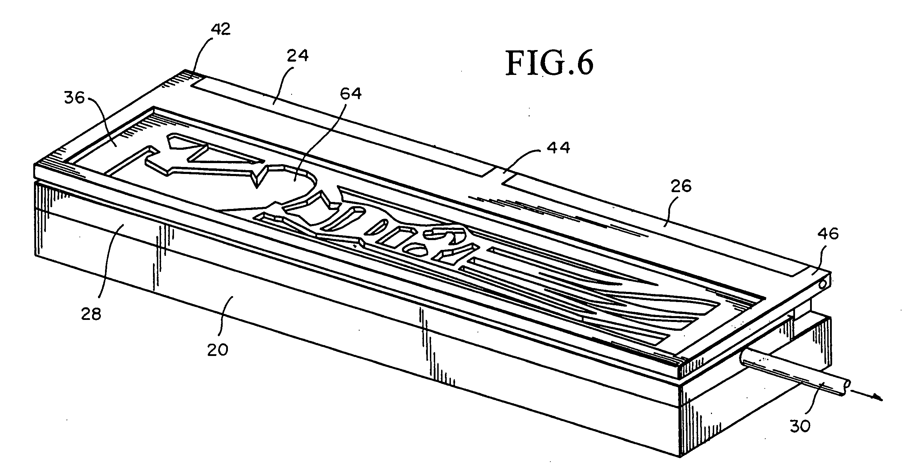

In Fig. 4, a stencil 36 is positioned above the assembly 12, 34. Stencil 36 fits within a window 38 in a carrier 40. Carrier 40 includes ears 42, 44, 46 that are connected to the members 24, 26 by pivot pins 48 (Fig.5). The pivot pins 48 extend length wise through the members 42, 44, 46 on the support 40, and through complementary longitudinal openings in the sidewall members 24, 26. As can be seen from Figs 4-6, the support member 40 is pivotally connected to the members 24, 26 by the hinge in 48. As shown by Figs 4 and 5, the lug 44 fits in a space 50 between the side members 24, 26. Lugs 42, 46 are positioned outwardly of the outer inns of the side members 24, 26. The side members 24, 26, the lugs 42, 44, 46 and the pivot pin 48 together define a "knuckle" hinge. This hinge connects the frame 40 to the side portions 24, 26 of the support member 20. It permits a swinging movement of the stencil carrier 40, between and "up" position, shown in Fig. 5, and a "down" position, shown in Fig. 6. The candy base member 12 and the plastic sheet 34 are secured by the vacuum to the vacuum holder 28 and the vacuum holder 28 is positioned on the upper surface 22 of the support member 20. When the stencil carrier 40 is in the "down" position, the stencil 36 is positioned down substantially on the upper surface of the candy base member 12.

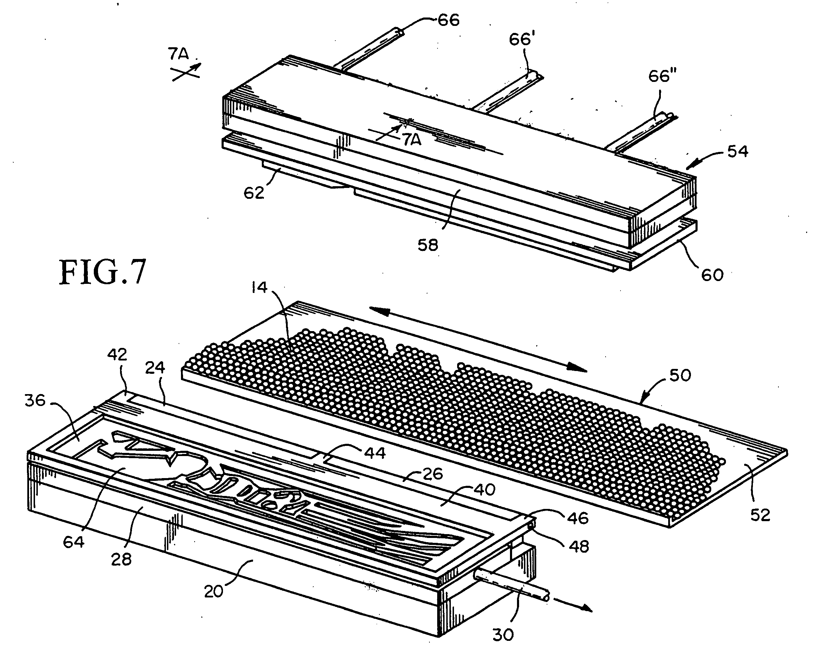

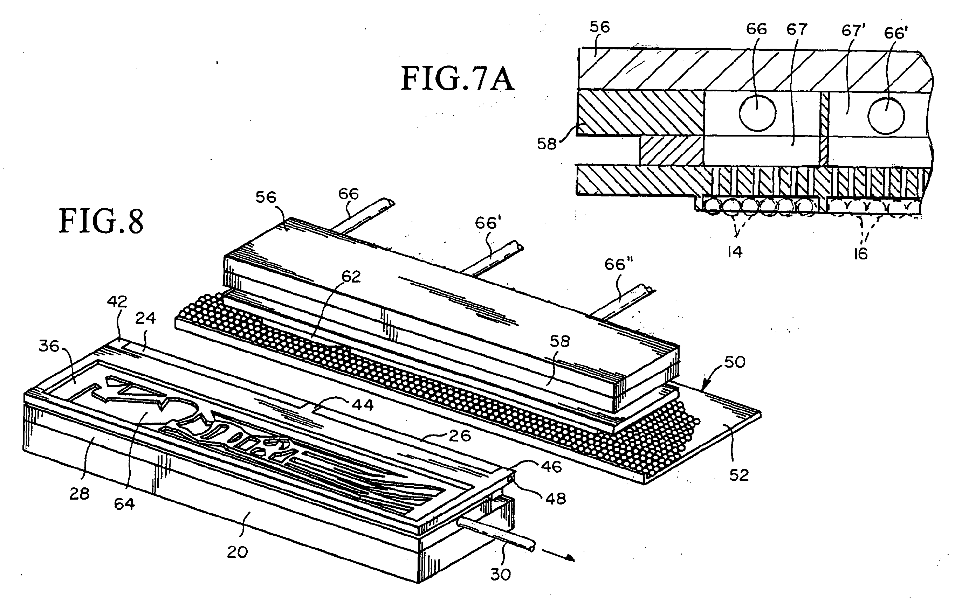

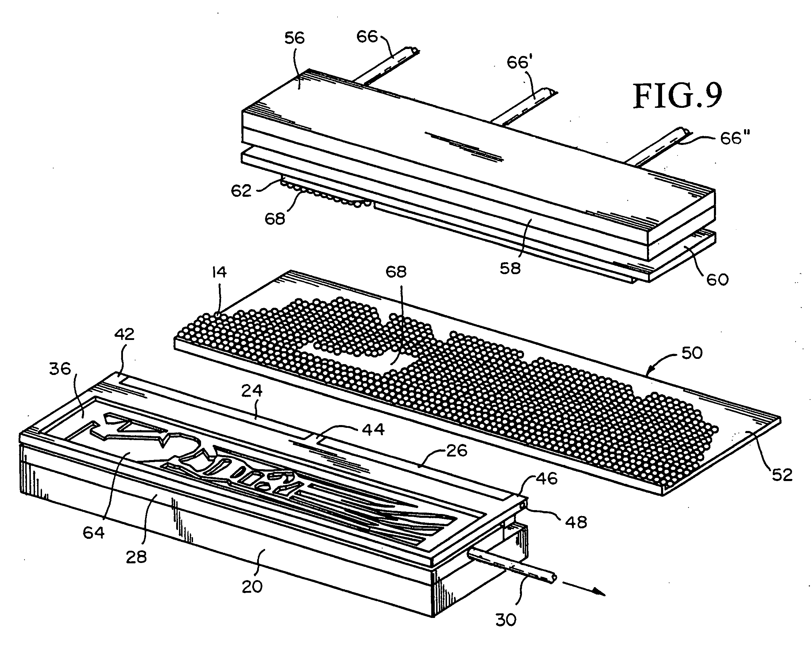

Fig. 7 shows additional equipment based above and to one side of the assembly 20, 28, 36, 40. A sheet member 50 having a planar upper support surface 52 is provided to support a first color of candy beads 14. The candy beads 14 are positioned on the surface 52 and the member 50 is titled slightly and then vibrated to cause the candy members 14 to move on the surface 52, causing them very close together within the same plane. A vacuum carrier 54 is provided. It includes an upper support member 56, a vacuum manifold 58 below the support member 56 and a mask 60 below the vacuum manifold 58. Mask 60 includes one or more cavities, each cavity is connected to the vacuum manifold by a plurality of small openings in the bottom of the manifold 58. By way of an example, mask 60 includes a mask area 62 that is positioned above regions 64 in the stencil 36. A conduit 66 connects a cavity 67 above mask portion 62 to a source of vacuum. Fig. 7A shows a second cavity 67 and a conduit 66'. A third conduit 66" is connected to a third cavity (not shown). In this illustrated example, vacuum from cavity 67 picks up candy beads 14. Vacuum from cavity 67' picks up candy beads 16. Referring to Fig. 8, the assembly 56, 58 is set down onto the candy beads 14 on the support surface 52. The vacuum that is connected to the mask region 62 attracts and grabs hold of a pattern of the beads 14 corresponding to the pattern provided by the mask 62. This pattern is designated 68 in Fig. 9. When the assembly 56, 58 is moved upwardly from the candy beads 14 on the surface 52, the pattern of candies 68 is picked up on the mask 62. The pattern 68 of beads 14 will retain its form and will be held against the mask 62 so long as the conduit 66 is connected to the vacuum.

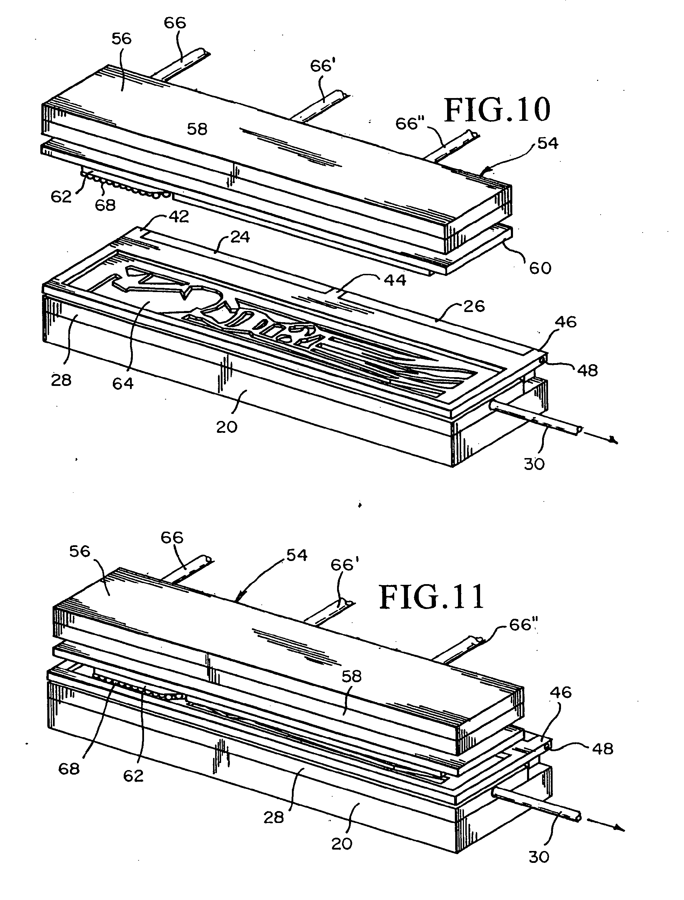

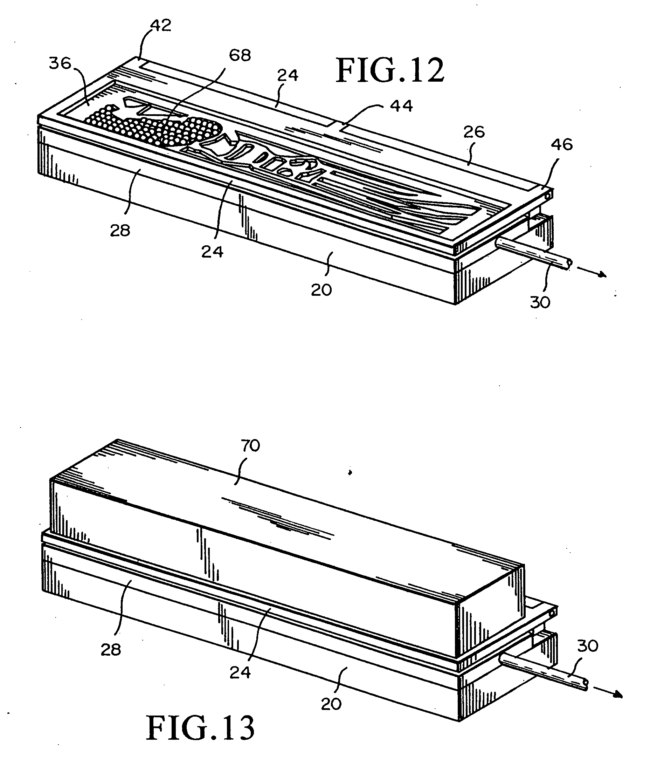

Fig. 10 shows the vacuum carrier 54 positioned above the stencil 36. It also shows the pattern of beads 14 positioned above the opening 64 in the stencil 36. Fig. 11 shows the vacuum carrier 54 lowered such that the pattern 68 of candy beads 14 is moved into the opening 64 in the stencil 36. Once the candy beads 14 are in contact with the upper surface of the candy base member 12, the vacuum is disconnected from the cavity above mask portion 62. As a result, the pattern 68 of candy beads 14 is no longer connected to the carrier 54. This allows the carrier 54 to be picked up and moved away from the stencil 36, leaving the pattern 68 of beads 14 within the opening 64 in the stencil 36, as shown by Fig. 12.

After the pattern 68 of candy beads 14 are deposited in region 64 of the stencil 36, a press block or presser 70 is placed in a cavity in the frame 40 that is above the stencil 36. When the presser 70 is in place, its lower surface is against the upper portions of the candy beads in the pattern 68. After the presser 70 is in place, a downward force is applied on it. This causes the presser 70 to push down on the candy beads 14 and push them into the candy base member 12.

It is within the scope of the present invention to provide the upper surface of the candy base member 12 with an edible adhesive. The presser 70 would then be used to press the candy beads 14 into the adhesive. The adhesive would make the candy beads 14 adhered better to the candy base member 12.

Referring back to Fig. 1, the regions identified by the numeral 14 are preferably all the same color, e.g. blue. The regions 16 are the same color of a different color, e.g. red. The regions 18 are of the same color of a third color, e.g. white. The candy base member 14 is preferably also colored. For example, it may be a dark color approaching the color black.

The above described example showing the placement of a pattern 64 of the beads 14 requires the use of a mask corresponding to each of the regions of the design that is made up of the candy beads 14. This region is connected to the cavity or cavities in the vacuum manifold by small openings in the lower wall of the manifold. Accordingly, when the carrier is placed down on the tray of candy beads 14, and the vacuum is connected to the vacuum chamber, candy beads 14 will be connected to the vacuum carrier in the region 64 of the mask, provided for the color represented by candy beads 14. The remaining region of the vacuum carrier is not connected to a vacuum, at that time at least, so that it will not pick up any of the candy beads below it. They will be left on the surface 52 of the member 50.

As shown by Fig. 7A, manifold 58 may include a separate chamber 67, 67', 67" (not shown) for each of the three (or more) bead patterns. Each manifold chamber will include small openings directed downwardly through the bottom wall of the manifold. Each will also have its own conduit connecting it to a source of vacuum. In the alternative, plural carriers 54 may be provided, one for each pattern of candy beads that is to be picked up and placed on the candy base member 12. Each of these manifolds would have a single manifold chamber and it will have openings in its lower portion where it is to pick up a pattern of color beads.

In a typical example, the candy base member 12 is made from a first color. Then, two or three (or more) different patterns of colored beads are applied to the base member 12, either directly or onto a layer of an edible adhesive that is first put on the upper surface base member 12. When all of the candy beads 14, 16, 18 are in place, the presser 70 is used to push the beads into the adhesive and or the candy base member. Fig. 2 shows lower portions of the beads 16, 18 after they have been moved into the candy base member 12.

The assembly shown by Fig. 6 may be stationary and the carrier or carriers 54 may be moved to it. Or, the assembly shown by Fig. 6 may be moved or conveyed along a path that includes a plurality of the vacuum carriers, one for each color candy bead, and the presser 70 at the end of the line. After the candy beads have been placed on the base member 12 and pushed into the base member 12, the resulting candy product 10 is preferably placed into a plastic wrapper and the wrapper is sealed. This step can be performed in a number of known ways. The wrapper may include trademark, descriptive wording and pictures that go with the product.

The illustrated embodiments are only examples of the present invention and, therefore, are non-limitive. It is be understood that many changes in the particular structure of the candy product 10 or apparatus used to make the candy product 10 may be made without departing from the spirit and scope of the invention. Also, it is within the scope of the invention to give the candy base member a mint flavor as opposed to a fruit flavor. For example, all of the flavors that have in the past been used in the past, or will be used in the future, to make gum drops and jelly beans can be used for the flavor of the base candy member 12. Instead of comic book characters, the pictures placed on the candy product can can be pictures of animals, flowers, cars, or other objects.

After the candy beads have been placed on the base member 12 and pushed into the base member 12, the resulting candy product 10 is preferably placed into a plastic wrapper and the wrapper is sealed. This step can be performed in a number of known ways. The wrapper may include trademark, descriptive wording and pictures that go with the product.

## Claims

1. The method comprising:
providing a substantially planar sheet candy member having an upper side and a lower side;
positioning the lower side of the sheet candy member on a substantially planar support surface;
providing a vacuum carrier having a substantially planar lower carrier surface;
placing colored candy beads next to each other on a substantially flat support surface;
placing the vacuum carrier over the candy beads with the lower carrier surface directed towards the candy beads;
moving the vacuum carrier downwardly to place the carrier surface adjacent the candy beads;
connecting the vacuum carrier to a vacuum and using the vacuum to pick up a predetermined pattern of the candy beads from the support surface and hold them on the lower carrier surface of the carrier;
positioning the carrier over the sheet candy member and moving the carrier and the pattern of candy beads relatively towards the sheet candy member to place the pattern of candy beads on the upper surface of the sheet candy member;
releasing the vacuum from the carrier and removing the carrier away from the sheet candy member; and
leaving the pattern of candy beads attached to the sheet candy member.

2. The method of claim 1, comprising applying an edible adhesive to the upper side of the sheet candy member and placing the pattern of candy beads on the upper surface of the sheet candy member.

3. The method of claim 1, wherein the pattern of colored candy beads are all the same color.

4. The method of claim 3, comprising placing additional colored candy beads of a different color next to each other on a substantially flat support surface;
placing a vacuum carrier over the additional candy beads and moving the vacuum carrier adjacent the additional candy beads;
using the vacuum to pick up a second pattern of said additional candy beads and hold such second pattern of candy beads on the lower carrier surface of the carrier;
positioning the carrier over the candy sheet member and moving the carrier and the second pattern of the additional candy beads downwardly to place the second pattern of additional candy beads on the upper surface of the sheet candy member;
releasing the vacuum from the carrier and removing the carrier away from the sheet candy member; and
leaving the second pattern of additional candy beads attached to the sheet candy member.

5. The method of claim 4, comprising providing an edible adhesive on the upper surface of the sheet candy member and placing the first and second predetermined patterns of the additional candy beads on the edible adhesive.

6. The method of claim 4, wherein the second pattern of additional color candy beads are all the same color.

7. The method of claim 4, comprising placing candy beads of a third color next to each other on a substantially flat support surface;
placing a vacuum carrier over the additional candy beads moving and moving the vacuum carrier onto the additional candy beads;
using the vacuum to pick up a third pattern of said third color of candy beads and hold such patten of beads on the lower carrier surface of the carrier;
positioning the carrier over the candy sheet member and moving the carrier and the third pattern of candy beads downwardly to place the third pattern of candy beads adjacent the upper surface of the sheet candy member;
releasing the vacuum from the carrier and removing the carrier away from the sheet candy member; and
leaving the third pattern of additional candy beads attached to the sheet candy member.

8. The method of claim 7, comprising providing an edible adhesive on the upper surface of the sheet candy member and placing the first, second and third pattern of candy beads on the edible adhesive.

9. The method of claim 8, wherein the three pattern of colored candy beads form a cartoon picture.

10. The method of claim 1, comprising placing the sheet of plastic on the planar support surface;
placing the lower side of the sheet candy member on the sheet plastic; and
using a vacuum to connect the sheet candy member and the sheet plastic to the planar support surface.

11. The method of claim 1, comprising using a fruit flavored candy member.

12. The method of claim 1, comprising vibrating the substantially flat support surface to cause the colored candy beads to move into close contact with each other on the substantially flat surface, without any of the candy beads being situated on top of other candy beads.

13. The method of claim 1, comprising positioning a press over the candy beads and using the press to push the candy beads into the sheet candy member.

14. The method of claim 13, comprising placing additional hard candy beads of a different color next to each other on a substantially flat support surface;
placing a vacuum carrier over the additional candy beads and moving the vacuum carrier adjacent the additional candy beads;
using the vacuum to pick up a second pattern of said additional candy beads and hold such second pattern of candy beads on the lower carrier surface of the carrier;
positioning the carrier over the candy sheet member and moving the carrier and the second pattern of the additional candy beads downwardly to place the second pattern of additional candy beads on the upper surface of the sheet candy member;
releasing the vacuum from the carrier and removing the carrier away from the sheet candy member; and
leaving the second pattern of additional candy beads attached to the sheet candy member.

15. Apparatus for making a candy product comprising a sheet candy member and patterns of different color candy beads on the sheet candy member, together with a sheet candy member forming a picture or a design, said apparatus comprising:
a support for the sheet candy member;
at least one substantially flat support surface for a two dimensional group of candy beads;
a vacuum carrier adopted to pick up a particular pattern of the candy beads from the group and hold them on a lower surface of the carrier; and
said vacuum carrier being in positionable over the sheet candy member on the support surface, and being movable downwardly onto the sheet candy member, and then being movable up away from the sheet candy member when the vacuum is turned off, leaving the candy beads on the upper surface of the sheet candy member.

16. The apparatus of claim 15, wherein the vacuum carrier comprises a vacuum manifold having a lower wall and openings in the lower wall or communicating a vacuum from the chamber to the candy beads, said openings being in the particular pattern of the candy beads that are picked up from the flat support surface.

17. Apparatus according to claim 15, wherein the support for the sheet candy member comprises a vacuum holder having a vacuum chamber and a top wall and openings in the top wall communicating the vacuum with a sheet candy member placed on the support.

18. The apparatus of claim 15, comprising a stencil positionable above the sheet candy member, said stencil including an opening corresponding in shape to the pattern of candy beads that is to be placed on the sheet candy member.

19. The apparatus of claim 18, comprising a support frame for the stencil and a base for the support, said support frame being pivotally connected to the base and being pivotally movable from a down position on the sheet candy member that is on the support and an up position in which it extends generally upwardly from the base.

20. The apparatus of claim 15, comprising a presser positionable for placement on the candy beads and usable for pressing the candy beads into the sheet candy member.

21. A candy product comprising a sheet candy member having an upper surface; and
a picture formed on the upper surface by patterns of different colored candy beads that are pressed into the upper surface of the sheet candy member.

22. The candy product of claim 21, wherein the sheet candy member is of a first color and the candy beads are formed in plural patterns of plural colors.

23. The candy product of claim 21, wherein the sheet candy member has a fruit flavor and is made from a mixture of fruit concentrate and fruit juice cooked with sugar and modified starch and the fruit concentrate is the predominant ingredient.

24. The candy product of claim 23, wherein the candy beads are rounded and measure about one sixteen (1/16) to about one eight (1/8) in diameter.
